# EUROPEAN PATENT SPECIFICATION

(11) **EP 0 728 709 B1**
(45) Date of publication and mention of the grant of the patent: **29.04.1998**
(21) Application number: 95102531.1
(22) Date of filing: 22.02.1995
(51) Int. Cl.: C03C 4/00, C03C 3/06, C03C 11/00, C03B 19/09

(54) **Opaque silica glass and the production process therefor**
Opakes Quarzglas und Verfahren zu dessen Herstellung
Verre de silice opaque et procédé pour sa production

(43) Date of publication of application: 28.08.1996
(73) Proprietor: Heraeus Quarzglas GmbH, D-63450 Hanau (DE); SHIN-ETSU QUARTZ PRODUCTS CO., LTD., Shinjuku-ku, Tokyo (JP)
(72) Inventor: Sato, Tatsuhiro, Takefu-shi, Fukui (JP); Fujinoki, Akira, Koriyama-shi, Fukushima (JP); Inaki, Kyoichi, Koriyama-shi, Fukushima (JP); Yoshida, Nobumasa, Koriyama-shi, Fukushima (JP); Yokota, Toru, Koriyama-shi, Fukushima (JP)
(74) Representative: Kühn, Hans-Christian

(56) References cited:
- EP-A- 0 319 031
- EP-A- 0 360 659
- US-A- 5 306 388
- PATENT ABSTRACTS OF JAPAN vol. 17 no. 251 (C-1060) & JP-A-05 000900 (TOSHIBA CERAMICS CO.,LTD.) 8 January 1993,

## Description

### FIELD OF THE INVENTION

The present invention relates to opaque silica glass which has a high purity and a high heat resistance and which excels in a thermal shielding, and more particularly to solid opaque silica glass which enables an opaque silica glass member useful as light diffusing and thermal shielding materials used for a furnace to be efficiently produced, and a production process therefor.

### BACKGROUND OF THE INVENTION

Silica glass has so far been used for a furnace and a heat treating jig for the semiconductor industry since it has a high purity and an excellent heat resistance. In the above heat treatment furnace for the semiconductor industry, it is important to uniformize the temperature distribution in the furnace. In order to meet the above object, a reactor tube is produced from the opaque silica glass containing 100,000 bubbles/cm³ or less, as found in Japanese Laid-Open Patent Publication No. H5-900 or a heat shielding plate made of the opaque silica glass containing less than 6,000 bubbles/cm³ is provided at both ends of a boat on which a semiconductor wafer is put, as described in Japanese Laid-Open Utility Model Publication No. H1-162234.

In recent years, a vertical furnace has been becoming the mainstream in the furnace for the semiconductor industry but in this vertical furnace, the lower end of the furnace is put on a metal frame, and heat rays are irregularly diffused at the joint of the furnace and the metal frame, or since a cooling unit provided for protecting a sealing member by which the joining part of the flange of the furnace to the metal frame is sealed disturbs the furnace temperature, the temperature distribution in the furnace is not uniformized, and therefore, it has been usual to provide light diffusing and thermal shielding plates.

The opaque silica glass has been preferably used as the light diffusing and thermal shielding materials described above because of the good heat resistance and thermal shielding thereof. The light diffusing and thermal shielding members made of the opaque silica glass described above is generally cut out from a solid opaque silica glass block in a plate form from a viewpoint of a working efficiency for the production thereof, and a method in which quartz raw material grain, particularly rock crystal grain is heated for sintering in an electric furnace after filling it in a heat resistant mold has been used for producing the opaque silica glass block. However, since large cavities are formed at the center of the block in this conventional method, there could not be produced the high purity opaque silica glass block containing uniform bubbles and having excellent light diffusion and thermal shielding. In addition, a bubble density in the conventional opaque silica glass was less than 100, 000 bubbles/cm³ as found in the above-mentioned Japanese Laid-Open Utility Model Publication No. H1-162234. Use of the light diffusing member made of this opaque silica glass for a light diffusing and thermal shielding member for the vertical furnace which has become the mainstream in the furnace for the recent semiconductor industry could not sufficiently prevent irregular diffusion of heat rays caused at the joint of the flange of the vertical furnace and a metal frame, and disturbance of a furnace temperature attributable to a cooling unit provided for protecting a sealing member. Further, a conventional opaque silica glass member has large deformation at a high temperature. Particularly in heat treatment of a silicon wafer which is heated up to about 1000°C or higher, extended heating time causes large thermal deformation and prevents a function as the thermal shielding and light diffusing members from being sufficiently displayed, which used to lead to short life of the furnace.

Accordingly, the intensive investigations made by the present inventors in order to solve the problems described above have resulted in finding that the thermal deformation of the opaque silica glass at a high temperature is related to the density of bubbles occupying in the silica glass and the heat resistance of the silica glass and that the thermal deformation is decreased by decreasing the whole volume of the bubbles occupying in the opaque silica glass while decreasing the diameter of the bubbles and increasing the bubble density to increase the whole bubble cross section per unit volume of the opaque silica glass, and further that the heat resistance is improved by reducing the concentrations of sodium, potassium and an OH group each contained in the opaque silica glass to the specific ranges or lower. It has been found that a nitrogen element doping in a specific range into the silica glass is effective particularly for improving the heat resistance and that it is notable particularly when synthetic quartz grain is used for raw material grain. It has been found as well that the opaque silica glass described above can be produced by using quartz raw material grain having a specific particle size and sintering it at a specific temperature-raising speed. The present invention has been completed based on such findings.

### SUMMARY OF THE INVENTION

The first object of the present invention is to provide high purity opaque silica glass containing therein independent bubbles of a small diameter is high and they are uniformly dispersed.

The second object of the present invention is to provide heat-shielding and light diffusing members having a high heat resistance and an excellent heat-shielding property.

The third object of the present invention is to provide a production process for the high purity silica glass described above.

The present invention for achieving the objects described above relates to the opaque silica glass having a density of 2.0 to 2.18 g/cm³, the sodium and potassium elements concentrations in the silica glass of each 0.5 ppm or less and an OH group concentration of 30 ppm or less, and containing bubbles which are independent bubbles having the following physical values:
(1) a bubble diameter of 300 µm or less, and
(2) a bubble density of 100,000 to 1,000,000 bubbles/cm³, and to the production process therefor.

### BRIEF DESCRIPTION OF THE DRAWINGS

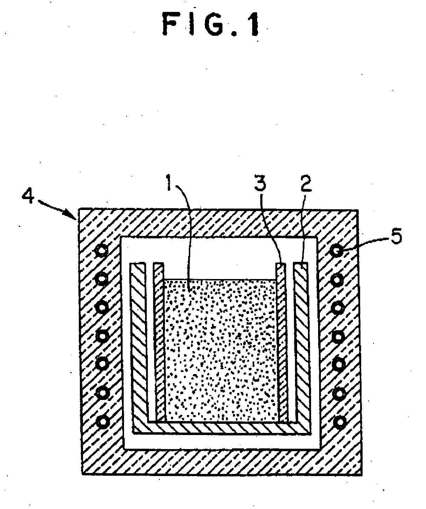

Fig. 1 is a schematic diagram for illustrating a production process for the opaque silica glass of the present invention using a silica glass mold.

### DETAILED DESCRIPTION OF THE INVENTION

The opaque silica glass defined in the present invention means opaque silica glass containing fine bubbles, obtained by heating and sintering quartz raw material grain in a non-oxidizing (e. g. reduction atmosphere, inert atmosphere)atmosphere. High purity crystalline quartz grain and high purity amorphous silica grain having a particle size of 10 to 350 µm are used as a raw material for producing this opaque silica glass. Particularly preferred are high purity quartz grain having the sodium and potassium concentrations of each 0.5 ppm or less among the alkaline metal elements or quartz grain obtained by chemically purifying high purity rock crystal grain to reduce the concentrations of sodium and potassium to 0.5 ppm or less as described in U. S. Patent 4,983,370, and amorphous quartz grain which is synthetic quartz glass obtained by a soot method and which is adjusted to the sodium and potassium concentrations of 0.5 ppm or less and a particle size of 110 to 350 µm. In addition to the above, the heat resistance is furthermore increased by subjecting quartz raw material grain to ammonia doped treatment to adjust a nitrogen element concentration in the opaque silica glass to 50 to 500 ppm. In particular, it is notable when synthetic quartz grain is used as raw material grain. For example, the opaque silica glass for which ammonia doped-treated natural quartz grain is used and which has the nitrogen element concentration falling in the range described above has a viscosity of 10^{12.8} poise at 1,260°C, which exceeds 10^{12.2} poise corresponding to the viscosity of the opaque silica glass produced from natural quartz grain. It is supposed that doping of a nitrogen element into the opaque silica glass described above generates an Si-N bond which is stronger than an Si-O bond to raise a high temperature viscosity. Further, the doping of the nitrogen element leads to allowing an NH group to exist, and absorption in a wavelength of 3,400 cm⁻¹ is generated to improve absorption in infrared rays, which leads to further reduction in a transmittance of heat rays. The above nitrogen content of less than 500 ppm can not increase the high temperature viscosity, and the content exceeding 500 ppm unfavorably allows nitrogen to be released during use. Further, reduction in a lithium concentration to 1.0 ppm or less is preferred as well for improvement in a heat resistance of the opaque silica glass.

An electric fusion method providing less OH group-mixed amount is employed for melting the quartz raw material grain described above. The OH group concentration of 30 ppm or less in the opaque silica glass can prevent viscosity reduction in the silica glass at a high temperature attributable to the OH group.

It is said that in heat conduction of the silica glass, radiation heat conduction is dominant when the temperature is raised to 1,000°C or higher. Existence of bubbles in the silica glass allows radiant ray at the temperature described above to cause reflection not only on a glass surface but also on the bubbles existing in the inside thereof. Thus, since the bubbles contained in the silica glass and the distribution thereof exert large influence to reflection and transmission of the radiant ray, it is essential to uniformly disperse the bubbles as well as to increase the whole cross-sectional area of the bubbles in the opaque silica glass when the opaque silica glass is used for the thermal shielding and light diffusing members for a furnace for silicon wafer.

Uniformly dispersing the large bubbles in the opaque silica glass is effective for increasing the whole cross-sectional area of the bubbles. However, according to the research made by the present inventors, it is found out that the thermal shielding and light diffusing members made of the opaque silica glass containing the large bubbles has large heat deformation at a high temperature. Since the larger the whole volume occupied by the bubbles contained in the opaque silica glass is, the larger the heat deformation at the high temperature becomes, the present inventors carried out the experiments based on the ideas that decreasing the volume of the bubbles contained in the opaque silica glass and increasing a bubble density would lead to total increase in the whole cross-sectional area of the bubbles to find that setting a diameter of the bubbles to 300 µm or less, preferably 20 to 180 µm and the density thereof to 100,00 to 1,000,000 bubbles/cm³ markedly improves the thermal shielding of the opaque silica glass. This opaque silica glass was measured for a transmittance of light having a wavelength of 0.2 to 5 µm to find that it was 10 % or less in case of a sample having a thickness of 4 mm.

The opaque silica glass of the present invention is required to have the density thereof limited to 2.0 to 2.18 g/cm³ in order to control the deformation by its own weight to a minimum level.

As described above, the opaque silica glass of the present invention has a large bubble density allows independent bubbles having a small size to be uniformly dispersed, provides the apparent high temperature viscosity thereof and excels in a heat resistance, light diffusion and thermal shielding. That prevents a thermal shielding and light diffusing member made of the opaque silica glass of the present invention from the heat deformation even if it would be subjected to heat treatment at a temperature exceeding 1,000°C for relatively extended time like the heat treatment of silicon wafer.

The opaque silica glass of the present invention is produced by the following process. That is, high purity quartz grain having a particle size of 10 to 350 µm is filled in a heat resistant mold, and then the above quartz raw material grain is heated preferably under a non -oxidizing atmosphere from a room temperature up to a temperature lower by 50 to 150°C than a temperature at which the above quartz raw material grain is melted at a temperature-raising speed which does not exceed 50 °C/minute, preferably 10 to 40°C/minute, followed by slowly raising the temperature up to a temperature higher by 10 to 30°C than the temperature at which the above quartz raw material grain is melted at the temperature-raising speed of 10°C/minute or less. Thereafter, it is kept at the above temperature for fixed time and then cooled to thereby produce the opaque silica glass of the present invention. Since the temperature-raising speed and the keeping time are changed according to a kind and a particle size of the quartz raw material grain, the optimum temperature-raising speed and keeping time are required to be set up in the range described above according to the quartz raw material grain. In particular, in order to produce high quality opaque silica glass in which fine independent bubbles are evenly dispersed, a temperature is preferably raised while providing a temperature gradient at the temperatures of an upper part and a lower part in a filling layer of the quartz raw material grain. The temperature gradient falls in a range of 10 °C or more.

The particle size of the quartz raw material grain used in the production process described above falls in a range of 10 to 350 µm. The particle size exceeding this range can not provide the uniform bubbles, and that less than the above range does not form the bubbles. The particle size range described above means a situation that sieving with a sieve having an opening of 350 µm provides no particles remaining on the sieve. Further introducing a nitrogen element into this quartz raw material grain improves a heat resistance of the opaque silica glass. Heating the quartz raw material grain in a temperature range of 600 to 1, 300°C in an ammonia atmosphere is preferred as the doping method therefor. The treatment described above gives a nitrogen element content of 50 ppm to 600 ppm in the opaque silica glass and raises a high temperature heat resistance.

In the production of the above opaque silica glass, inserting a silica glass mold into a heat resistant vessel and filling therein the quartz raw material grain to melt it allow the quartz raw material grain to shrink by 10 to 20 % in melting to generate a gap between the silica glass mold and a quartz raw material grain layer, and so-called grain dropping in which the quartz raw material grain drops therein from an upper part of the quartz raw material grain layer is caused, which may form cracks in the opaque silica glass. However, a viscosity of a silica glass tube is lowered and deformed by its own weight to result in filling up the gap described above. Accordingly, the opaque silica glass obtained has no cracks, and the high quality opaque silica glass glass can be produced. Further, since the silica glass mold described above protects the silica glass from the heat resistant vessel, the opaque silica glass is prevented from being influenced by contaminants contained in the heat resistant mold(e.g. graphite). Insertion of a silica glass molding frame enables a transmittance distribution of the opaque silica glass in a lateral direction to be uniformized. This is considered to be attributable to that since the silica glass has a smaller heat conductivity than graphite, abnormal temperature elevation on a surface of the quartz raw material grain in melting can be suppressed. A quartz glass tube and a mold formed by building a silica glass blocks are used for the silica glass molding frame described above. A mold made of high purity ceramics, particularly a high purity graphite mold is suitable for the heat resistant mold. A filling height of the quartz raw material grain filled in the respective molds described above is suitably set to 300 mm or lower. That exceeding this range does not uniformly disperse bubbles in some cases.

Nitrogen gas is preferred for non-oxidizing atmosphere gas used in melting the opaque silica glass described above. Active gas is replaced with inert gas by melting in this non-oxidizing atmosphere gas, and the active gas contained in the bubbles is decreased. The following examples are to concretely explain the present invention, and these examples will not limit the present invention.

### EXAMPLES

The following measuring methods are used in the examples.
i) Thermal diffusivity: value measured by a laser flash method.
ii) Specific heat: value measured by an adiabatic continuous method.
iii) Heat conductivity: value measured by a heat ray method.
iv) Bubble density/bubble distribution: according to DIN 58927, a thin section of the opaque silica glass having a fixed volume is photographed with transmitted light to count a number of bubbles contained therein, and the number is converted to per cm³ of the opaque silica glass.
v) Glass density: value measured by the Archimedes' method.
vi) OH group concentration: value measured by FT-IR.
vii) Apparent viscosity: a sample is cut out in a strip form of 3 × 1 × 50 mm, and a value is calculated from a deforming amount given when the sample is maintained at 1,260°C for 10 hours according to a beam bending method (supported at two points with no load).
viii) Nitrogen element concentration: value measured by an inert gas melt conductivity method.
ix) Gas amount in bubbles: value obtained by measuring gas coming from bubbles after breaking an opaque silica glass piece by a gas chromatograph mass spectrometry.

The raw material used in Examples 1 to 2 and Comparative Examples 1 to 3 are the quartz grain A obtained by removing the particles having a particle size of 250 µm or more and the quartz grain B obtained by removing the particles having the particle size of 180 µm or more, and there are shown in Table 1, the particle size distributions thereof (mean a weight ratio of the quartz grain remaining on a sieve having a mesh aperture shown in a particle size column when the quartz grains used are sieved).

**Table 1**

| Particle size (µm) | >300 | >250 | >212 | >180 | >150 | >103 |
|---|---|---|---|---|---|---|
| Raw material | 2 | 22 | 31 | 14 | 5 | 26 |
| Quartz grain A | 0 | 0 | 40 | 18 | 7 | 35 |
| Quartz grain B | 0 | 0 | 0 | 30 | 11 | 59 |

Note : The numerals in the table represent weight %.

### Example 1

The quartz grain A described above was put in an electric furnace having a silica glass tube for a reactor tube, and it was subjected to heat treatment in hydrogen chloride /nitrogen of 50 : 50 at 1,200°C for one hour to purify alkali metals. This purified quartz grain A was filled in a high purity graphite mold having inside diameter ⌀ 200 mm × height 200 mm up to the depth of 100 mm, and it was settled in a vacuum furnace to remove air remaining between the particles by vacuum-exhausting to 10⁻² torr or lower. Then, vacuum in the furnace was broken with nitrogen, and a temperature was raised from a room temperature up to 1,200°C at a speed of 20°C/minute, from 1,200°C to 1, 630°C at 6.14°C/minute and from 1,630°C to 1,750°C at 0.34°C/minute while flowing nitrogen at a flow amount of 5 ℓ/minute, followed by maintaining at 1,750°C for 50 minutes. After it was vitrified, supply of electricity to the furnace was stopped to leave it for cooling spontaneously. A sample was cut out from the opaque silica glass block thus obtained, and this sample was measured for a thermal diffusivity, a specific heat, a heat conductivity, a bubble density, a whole bubble volume, a glass density, and a bubble distribution. The measuring results of the former three are shown in Table 2, and those of the latter in Tables 3 and 4.

**Table 2**

| Temperature (°C) | Thermal diffusivity (cm²/sec) | Specific heat (cal/g·°C) | Heat conductivity (cal/cm·sec·°C) |
|---|---|---|---|
| 20 | 0.0082 | 0.17 | 0.0030 |
| 200 | 0.0074 | 0.22 | 0.0035 |
| 400 | 0.0070 | 0.25 | 0.0038 |
| 500 | 0.0069 | 0.26 | 0.0039 |
| 600 | 0.0070 | 0.28 | 0.0041 |
| 700 | 0.0071 | 0.28 | 0.0042 |
| 800 | 0.0071 | 0.29 | 0.0044 |
| 900 | 0.0071 | 0.29 | 0.0045 |
| 1,000 | 0.0074 | (0.30) | 0.0047 |
| 1,100 | 0.0076 | (0.30) | 0.0049 |
| 1,200 | 0.0080 | (0.30) | 0.0052 |

As apparent from the results shown in above Table 2 it can be found that the opaque silica glasses of the present invention have a low heat conductivity and an excellent thermal shielding.

### Example 2

After the quartz grain B was subjected to removal treatment of the alkaline metal elements in the same conditions as those in Example 1, it was vitrified while controlling a melting temperature in the same manner as that in Example 1 to thereby obtain an opaque silica glass block. A sample was cut out from the opaque silica glass block to measure the bubble density, whole bubble volume, glass dennsity and bubble distribution thereof. The results thereof are shown in Tables 3 and 4.

### Comparative Example 1

After raw material was subjected to the removal treatment of the alkaline metal elements in the same conditions as those in Example 1, it was filled in a graphite mold to produce an opaque silica glass block in the same manner as that in Example 1. A sample was cut out from the opaque silica glass block thus obtained to measure the bubble density, whole bubble volume, glass density and bubble distribution thereof. The results thereof are shown in Tables 3 and 4.

### Comparative Example 2

The quartz grain A was filled in a graphite mold as it was without subjecting it to the alkaline metal removal treatment, and it was melted for vitrification in the same conditions as those in Example 1 to thereby obtain opaque silica glass. A sample was prepared from the opaque silica glass block to measure the bubble density, whole bubble volume, glass density and bubble distribution thereof. The results thereof are shown in Tables 3 and 4.

### Comparative Example 3

After the quartz grain A was subjected to the alkaline metal removal treatment, it was subjected to rotational molding and melted by heating from an inside with arc flame in an atmospheric environment to thereby produce an opaque silica glass block. A sample was cut out from the opaque silica glass block to measure the bubble density, whole bubble volume, glass density and bubble distribution thereof. The results thereof are shown in Tables 3 and 4.

### Comparative Example 4

Raw material was sieved to classify only the quartz grain having a particle size of 103 mm or less and an average particle size of 50 µm, and it was subjected to the alkaline metal removal treatment in the same manner as that in Example 1. Then, it was melted by heating to produce opaque silica glass. A sample was cut out from the opaque silica glass block to measure the bubble density, whole bubble volume, glass density and bubble distribution thereof. The results thereof are shown in Tables 3 and 4.

**Table 3**

| | Bubble density (bubbles/cm³) | Whole bubble volume (%) | Glass density (g/cm³) |
|---|---|---|---|
| Example 1 | 270,000 | 7.8 | 2.125 |
| Example 2 | 478,200 | 8.8 | 2.115 |
| Comparative Example 1 | 80,800 | 6.8 | 2.135 |
| Comparative Example 2 | 153,400 | 5.8 | 2.150 |
| Comparative Example 3 | 62,000 | 3.8 | 2.165 |
| Comparative Example 4 | 1,163,000 | 15.8 | 2.050 |

**Table 4**

| Bubbles diameter (µm) | Example 1 | Example 2 | Comparative Example 1 | Comparative Example 2 | Comparative Example 3 | Comparative Example 4 |
|---|---|---|---|---|---|---|
| 0 to 20 | 24,300 | 67,800 | 5,100 | 6,500 | 900 | 172,000 |
| 21 to 40 | 75,600 | 160,000 | 3,800 | 19,600 | 7,100 | 332,100 |
| 41 to 60 | 51,300 | 98,000 | 8,300 | 21,200 | 8,900 | 304,800 |
| 61 to 80 | 33,800 | 47,100 | 10,200 | 39,200 | 10,600 | 114,700 |
| 81 to 100 | 36,500 | 50,800 | 12,700 | 31,800 | 5,300 | 172,000 |
| 101 to 120 | 21,600 | 30,100 | 15,900 | 23,700 | 6,200 | 62,800 |
| 121 to 140 | 14,800 | 20,700 | 8,900 | 7,300 | 3,500 | 5,500 |
| 141 to 160 | 12,100 | 3,700 | 10,800 | 4,100 | 6,200 | 0 |
| 161 to 180 | 0 | 0 | 1,300 | 0 | 900 | 0 |
| 181 to 200 | 0 | 0 | 1,900 | 0 | 900 | 0 |
| 201 to 220 | 0 | 0 | 1,300 | 0 | 1,800 | 0 |
| 221 to 240 | 0 | 0 | 600 | 0 | 0 | 0 |
| 241 to 260 | 0 | 0 | 0 | 0 | 0 | 0 |
| 261 to 280 | 0 | 0 | 0 | 0 | 0 | 0 |
| 281 to 300 | 0 | 0 | 0 | 0 | 0 | 0 |
| Total (bubbles/cm³) | 270,000 | 478,200 | 80.800 | 153,400 | 62,000 | 1,163,900 |

As can be seen in Tables 3 and 4, it can be found that the opaque silica glass obtained by subjecting the quartz grain in which the maximum diameter in a particle size was adjusted to a range of 110 µm or more and 250 µm or less to the alkali removal treatment has the bubble volume which is almost the same as compared with the opaque silica glasses in Comparative Example 1 in which the particle size was not adjusted and Comparative Example 2 in which the alkali removal treatment was not carried out while the particle size was adjusted, but the bubble density is large, which leads to increase in a thermal shielding effect.

Further, as shown in Table 4, the bubbles contained in the opaque silica glass obtained by using the quartz grain having a particle size distribution falling within the range of the present invention are fine as compared with those in the comparative examples described above, and the distribution thereof is uniform. An alkaline metal element concentration, an OH group concentration and an apparent viscosity (1,260 °C) in the opaque silica glasses prepared in Examples 1 and 2 and Comparative Examples 1 to 3 each described above are shown in the following Table 5.

**Table 5**

| | Na (ppm) | K (ppm) | Li (ppm) | OH group (ppm) | Apparent viscosity {(log η), poise} 1,260 °C |
|---|---|---|---|---|---|
| Example 1 | <0.1 | 0.1 | 0.1 | 0 | 12.7 |
| Example 1 | <0.1 | 0.1 | 0.1 | 0 | 12.6 |
| Comparative Example 1 | <0.1 | 0.1 | 0.1 | 0 | 12.7 |
| Comparative Example 2 | 1.0 | 1.0 | 0.2 | 0 | 12.5 |
| Comparative Example 3 | <0.1 | 0.1 | 0.1 | 80 | 12.3 |

As apparent from Table 5 described above, the opaque silica glasses having the alkaline metal element concentration and the OH group concentration each falling within the range prescribed in the present invention have a high viscosity at a high temperature and an excellent heat resistance.

The samples having a thickness of 4 mm were cut out from the opaque silica glasses prepared in Examples 1 and 2 and the blocks obtained in Comparative Examples 1 to 4, and after polishing the surfaces thereof with #800, the surfaces were burned for finishing with oxyhydrogen flame. These samples were measured for a transmittance in up to 0.2 to 5 µm with a spectrophotometer for ultraviolet and visible region and an infrared spectrophotometer. The results thereof are shown in Table 6.

**Table 6**

| Wavelength (µm) | Example 1 (%) | Example 2 (%) | Comparative Example 1 (%) | Comparative Exasmple 2 (%) | Comparative Example 3 (%) | Comparative Example 4 (%) |
|---|---|---|---|---|---|---|
| 0.2 | 0 | 0 | 0 | 0 | 0 | 0 |
| 0.5 | 2 | 1 | 3 | 4 | 5 | 1 |
| 1.0 | 4 | 3 | 6 | 8 | 10 | 1 |
| 1.5 | 5 | 4 | 7 | 10 | 15 | 2 |
| 2.0 | 5 | 4 | 7 | 10 | 15 | 2 |
| 2.5 | 4 | 3 | 6 | 10 | 15 | 2 |
| 3.0 | 3 | 2 | 4 | 10 | 15 | 1 |
| 3.5 | 2 | 1 | 3 | 10 | 15 | 1 |
| 4.0 | 1 | 1 | 2 | 5 | 8 | 1 |
| 4.5 | 1 | 1 | 1 | 2 | 2 | 1 |
| 5.0 | 0 | 0 | 0 | 0 | 0 | 0 |

As can be seen in Table 6 described above, it can be found that the opaque silica glasses of the present invention have a low infrared transmittance and an excellent thermal shielding.

### Example 3

Natural quartz grain having a particle size of 100 to 300 µm and an average particle size of about 230 µm was filled in a graphite-made mold having an inside diameter of 260 mm and a height of 300 mm, and it was settled in a vacuum furnace to remove air remaining between the particles by vacuum-exhausting to 10 torr or lower. Then, vacuum in the furnace was broken with nitrogen, and a temperature was raised from a room temperature to 1,200°C in one hour, from 1,200°C to 1,630°C in 70 minutes and from 1,630°C to 1,720°C in 350 minutes while flowing nitrogen at a flow amount of 5 ℓ/minute and controlling so that a lower position temperature in a quartz grain-filling layer was always 10°C higher than an upper position temperature. Then, after heating for 50 minutes while maintaining a temperature of the whole quartz grain-filling layer described above at 1720°C, heating was stopped to cool down to a room temperature, and an opaque silica glass block was taken out. The opaque silica glass block thus obtained was cut out in a plate form of about 8 mm, and the bubble density and bubble size thereof were measured to find that the bubble density was 320,000 bubbles/cm³ and the bubble size fell in a range of 10 to 160 µm. A thermal shielding member prepared using the opaque silica glass of the present invention was not subjected to thermal deformation even in the heat treatment over 1,000°C for a long time like the heat treatment of silicon wafer, and sufficient light diffusivity and thermal shielding could be maintained.

### Comparative Example 5

The same high purity quartz grain as that used in Example 3 was filled in the graphite mold and heated at the same temperature-raising speed as that in Example 3 without providing a temperature difference, followed by keeping at 1750°C for 350 minutes, whereby an opaque silica glass block was produced. The opaque silica glass block thus obtained had blowholes generated in the vicinity of an upper surface.

### Comparative Example 6

The quartz grain was heated in the same atmosphere and temperature-raising condition as those in Comparative Example 5 and maintained at 1,850°C for 3 hours. While it was totally melted, very fine bubbles were put together at an upper part, and a bubble density was low at middle and lower parts. In particular, the bubbles at a bottom were large and made a translucent layer.

### Example 4

The quartz grain A having a specific surface area of 0.1 m²/g used in Example 1 was put in an electric furnace having a silica glass tube for a reactor tube, and it was subjected to the heat treatment in hydrogen chloride/nitrogen of 50 : 50 at 1,200°C for one hour to purify alkali metals and the respective elements of iron, magnesium and zirconium. This purified quartz grain A was filled once again in the reactor tube and treated at 900°C for 3 hours in an atmosphere in which a ratio of ammonia/nitrogen was 50 : 50 to dope ammonia into it. This ammonia doped quartz grain was filled in a high purity graphite mold having inside diameter ⌀200 mm × height 200 mm up to the depth of 200 mm, and it was settled in a vacuum furnace to remove air remaining between the particles by vacuum-exhausting to 10⁻² torr or lower. Then, vacuum in the furnace was broken with nitrogen, and a temperature was raised from a room temperature to 1,200°C at a speed of 20°C/minute, from 1,200°C to 1,630°C at 6.14°C/minute and from 1,630°C to 1,750 °C at 0.34 °C/minute while flowing nitrogen at a flow amount of 5 ℓ/minute, followed by maintaining at 1,750°C for 50 minutes to vitrify it. After vitrification, supply of electricity to the furnace was stopped to leave it for cooling spontaneously. A sample was cut out from the opaque silica glass block thus obtained and was measured to find that a bubble density was 478,000 bubbles/cm³, a whole bubble volume 8.8 %, an apparent viscosity (log η) at 1,260°C was 12.80 poise, a nitrogen element concentration was 500 ppm, and an OH concentration was 0 ppm, and the bubbles fell in a range of 160 µm or less in terms of a diameter. A gas component in the bubbles was nitrogen by 99 % or more. Further, a transmittance in an infrared region was low, and a thermal shielding was excellent.

### Example 5

A silica glass molding frame 3 having a outside diameter of 270 mm, a thickness of 4 mm and a height of 300 mm was inserted in a graphite-made mold 2 having a inside diameter of 270 mm and a height of 300 mm as shown in Fig. 1. Quartz grain 1 having a particle size of 50 to 200 µm, an average particle size of 100 mm and a bulk density of 1.4 g/cm³ was filled in this silica glass molding frame and settled in an electrical furnace 4 equipped with a heater 5 to remove air remaining between the particles by vacuum-exhausting to 10 to 2 torr or lower. Then, vacuum in the furnace was broken with nitrogen, and a temperature was raised up to 1,200°C in 120 minutes, from 1,200°C to 1,630°C in 90 minutes and from 1,630°C to 1, 750°C in 240 minutes while flowing nitrogen at a flow amount of 5 ℓ/minute. Then, after heating for 60 minutes while maintaining at 1,750°C, heating was stopped to cool down to a room temperature to take out an opaque silica glass block. A disc of about 4mm was cut out from the opaque silica glass block thus obtained, and the surface was burned for finishing with oxyhydrogen flame to prepare a sample. The sample was measured for an infrared ray transmittance in 0.2 to 5 µm to find that the transmittance was 5 % or less, and abnormal foaming and inclusions could not be found out. The samples having a thickness of 4 mm were cut out from the opaque silica glass block described above and the opaque silica glass block prepared in Example 1, and after polishing the surfaces thereof with #800, the surfaces were burned for finishing with oxyhydrogen flame. The samples thus obtained were measured for a transmittance distribution in a lateral direction in 2 µm by every 1 cm from a center to an outside of the sample. The results thereof are shown in Table 7.

**Table 7**

| Measuring point (cm) | Example 1 (%) | Example 5 (%) |
|---|---|---|
| 0 from center | 5 | 5 |
| 1 | 6 | 4 |
| 2 | 6 | 5 |
| 3 | 7 | 4 |
| 4 | 8 | 5 |
| 5 | 8 | 3 |
| 6 | 7 | 4 |
| 7 | 6 | 5 |
| 8 | 8 | 5 |
| 9 | 10 | 4 |
| 10 | 15 | 5 |
| 11 | - | 5 |
| 12 | - | 6 |
| 13 | - | 7 |

As can be found from the results shown in above Table 7, in the case where the silica glass tube was inserted in the graphite mold, evenness in the distribution of the transmittance in the lateral direction was improved while a diameter of the opaque silica glass was increased.

## Claims

1. Opaque silica glass characterized in that the density thereof is 2.0 to 2.18 g/cm³, the concentration of each of sodium and potassium elements contained therein is 0.5 ppm or less, the concentration of an OH group contained therein is 30 ppm or less and bubbles contained therein are independent ones having the following physical values:
(1) a bubble diameter of 300 µm or less, and
(2) a bubble density of 100,000 to 1,000,000 bubbles/cm³.

2. Opaque silica glass characterized in that the density thereof is 2.0 to 2.18 g/cm³, the concentration of each of sodium and potassium elements contained therein is 0.5 ppm or less, the concentration of an OH group contained therein is 30 ppm or less, the concentration of nitrogen element contained therein is 50 to 500 ppm and bubbles contained therein are independent ones having the following physical values:
(1) bubble diameter of 300 µm or less, and
(2) a bubble density of 100,000 to 1,000,000 bubbles/cm³.

3. Opaque silica glass according to Claim 1 or 2, wherein the transmissivity of light of a wavelength of 0.2 to 5 µm through the opaque silica glass(thickness of 4 mm) is 20% or less.

4. A process for producing opaque silica glass, which comprises the steps of:
filling into a heat-resistance mold a quartz raw material grain having a particle size of 10 to 350 µm:
heating said grain from the room temperature up to a temperature lower by in a range of 50 to 150°C than a melting point of quartz grain at a temperature-elevating speed not exceeding 50°C/min;
slowly heating said grain up to a temperature higher by in a range of 10 to 80°C than the melting point of silica glass at a speed of 10°C/min or less; and
cooling after maintained it at said heating temperature.

5. A process according to Claim 4, wherein said quartz raw material grain is filled into a space formed by a silica glass molding frame inserted into said heat-resistant vessel.

6. A process according to Claim 4, wherein said temperature is raised while providing a temperature gradient at the temperatures of an upper part and a lower part in a filling layer of the quartz raw material grain.

7. A process according to Claim 6, wherein said temperature gradient falls in 10 °C or more.

## Patentansprüche

1. Opakes Quarzglas, dadurch gekennzeichnet, daß es eine Dichte von 2,0 bis 2,18 g/cm³ aufweist, die darin enthaltene Konzentration an Natrium- und Kaliumelementen jeweils 0,5 ppm oder weniger beträgt, die enthaltene Hydroxylgruppen-Konzentration 30 ppm oder weniger beträgt und daß enthaltene Blasen einzeln vorliegen und folgende physikalische Charakteristika aufweisen:
(1) Blasendurchmesser von 300 µm oder weniger, und
(2) Blasendichte von 100.000 bis 1.000.000 Blasen / cm³.

2. Opakes Quarzglas, dadurch gekennzeichnet, daß es eine Dichte von 2,0 bis 2,18 g/cm³ aufweist, die darin enthaltene Konzentration an Natrium- und Kaliumelementen jeweils 0,5 ppm oder weniger beträgt die enthaltene Hydroxylgruppen-Konzentration 30 ppm oder weniger beträgt, die enthaltene Konzentration an Stickstoffelementen 50 bis 500 ppm beträgt und daß enthaltene Blasen einzeln vorliegen und folgende physikalische Charakteristika aufweisen:
(1) Blasendurchmesser von 300 µm oder weniger, und
(2) Blasendichte von 100.000 bis 1.000.000 Blasen / cm³.

3. Opakes Quarzglas nach Anspruch 1 oder 2, dadurch gekennzeichnet, daß die spezifische Durchlässigkeit von Licht mit einer Wellenlänge von 0,2 bis 5 µm durch das opake Quarzglas (Dicke 4 mm) 20 % oder weniger beträgt.

4. Verfahren zur Herstellung von opakem Quarzglas, das folgende Arbeitsschritte umfaßt:
Einfüllen von Quarzgranulat-Ausgangsmaterial mit einer Korngröße von 10 bis 350 µm in eine hitzebeständige Form;
Erhitzen des Granulats von Raumtemperatur auf eine Temperatur im Bereich von 50 bis 150 °C unterhalb des Schmelzpunktes von Quarzgranulat mit einer Aufheizgeschwindigkeit von maximal 50 °C/min;
langsames Erhitzen des Granulats auf eine Temperatur im Bereich von 10 bis 80 °C oberhalb des Schmelzpunktes von Quarzglas mit einer Geschwindigkeit von 10 °C/min oder weniger; und
Kühlen, nachdem es auf dieser Erhitzungstemperatur gehalten wurde.

5. Verfahren nach Anspruch 4, dadurch gekennzeichnet, daß das Quarzgranulat-Ausgangsmaterial in ein Quarzglas-Formwerkzeug gefüllt wird, das in das hitzebeständige Gefäß eingesetzt wird.

6. Verfahren nach Anspruch 4, dadurch gekennzeichnet, daß die oben genannte Temperatur erhöht wird, wobei zwischen der Temperatur des oberen Teils und der des unteren Teils einer eingefüllten Schicht des Quarzgranulat-Ausgangsmaterials ein Temperaturgradient entsteht.

7. Verfahren nach Anspruch 6, dadurch gekennzeichnet, daß der Temperaturgradient 10 °C oder mehr beträgt.

## Revendications

1. Verre de silice opaque, caractérisé en ce que sa masse volumique est de 2,0 à 2,18 g/cm³, les concentrations d'éléments sodés et potassés s'y trouvant sont chacune de 0,5 ppm ou moins, la concentration de groupes OH s'y trouvant est de 30 ppm ou moins, et les bulles s'y trouvant sont des bulles indépendantes ayant les valeurs physiques suivantes :
(1) un diamètre de bulles de 300 µm ou moins, et
(2) une densité de bulles de 100 000 à 1 000 000 bulles/cm³.

2. Verre de silice opaque, caractérisé en ce que sa masse volumique est de 2,0 à 2,18 g/cm³, les concentrations d'éléments sodés et potassés s'y trouvant sont chacune de 0,5 ppm ou moins, la concentration de groupes OH s'y trouvant est de 30 ppm ou moins, la concentration d'éléments azotés s'y trouvant est de 50 à 500 ppm et les bulles s'y trouvant sont des bulles indépendantes ayant les valeurs physiques suivantes :
(1) un diamètre de bulles de 300 µm ou moins, et
(2) une densité de bulles de 100 000 à 1 000 000 bulles/cm³.

3. Verre de silice opaque selon la revendication 1 ou 2, dans lequel le facteur de transmission d'une lumière ayant une longueur d'onde de 0,2 à 5 µm au travers du verre de silice opaque (ayant une épaisseur de 4 mm) est de 20 % ou moins.

4. Procédé pour produire un verre de silice opaque, qui comprend les étapes consistant à :
introduire dans un moule résistant à la chaleur des grains de matière première de quartz ayant une granulométrie de 10 à 350 µm ;
chauffer lesdits grains de la température ambiante à une température inférieure de l'ordre de 50 à 150°C au point de fusion des grains de quartz, à une vitesse de montée en température ne dépassant pas 50°C/min ;
chauffer lentement lesdits grains jusqu'à une température supérieure de l'ordre de 10 à 80°C au point de fusion du verre de silice, à une vitesse de 10°C/min ou moins ; et
refroidir après maintien à ladite température de chauffage.

5. Procédé selon la revendication 4, dans lequel lesdits grains de matière première de quartz sont introduits dans un espace formé par un cadre de moulage de verre de silice inséré dans ledit récipient résistant à la chaleur.

6. Procédé selon la revendication 4, dans lequel ladite température est élevée avec un gradient de température aux températures de la partie supérieure et de la partie inférieure d'une couche de remplissage des grains de matière première de quartz.

7. Procédé selon la revendication 6, dans lequel ledit gradient de température est situé dans la gamme de 10°C ou plus.
